# FASCICULE DE BREVET EUROPEEN

(11) **EP 1 683 691 B1**
(45) Date de publication et mention de la délivrance du brevet: **15.08.2007**
(21) Numéro de dépôt: 06300037.6
(22) Date de dépôt: 17.01.2006
(51) Int. Cl.: B60R 21/34, E05F 5/02

(54) **Butée d'appui de capot de véhicule automobile effaçable en cas de choc**
Motorhauben-Anschlag für Fahrzeug versenkbar im Fall eines Aufschlags
Hood stopper for a vehicle, collapsible in case of shock

(30) Priorité: 18.01.2005 FR 0550146
(43) Date de publication de la demande: 26.07.2006
(73) Titulaire: Peugeot Citroen Automobiles, 78140 Velizy-Villacoublay (FR)
(72) Inventeur: Virgoulay, Christophe, 25200 Montbeliard (FR); Gavillon, Paul, 25200 Grand Charmont (FR)

(56) Documents cités:
- EP-A- 0 943 773
- FR-A- 2 852 570

## Description

L'invention concerne les butées d'appui montées entre le capot articulé d'un véhicule automobile et un élément de la structure dudit véhicule. Elle concerne, plus particulièrement, des butées capables de minimiser les conséquences d'un choc frontal entre le véhicule et un piéton.

Les butées de ce type sont généralement fixées sur un élément de structure de façon que le capot repose sur leur tête lorsqu'il est en position fermé. Elles ont à la fois un rôle d'amortissement des vibrations et de réglage de la position fermée du capot pour assurer un affleurement précis de celui-ci par rapport aux parties adjacentes de la carrosserie du véhicule. C'est pourquoi, elles portent à leur extrémité un élément d'amortissement élastique dont on peut, éventuellement, réglé la hauteur.

En cas de choc frontal entre un véhicule et un piéton, la tête du piéton vient, en général, heurter violemment le capot. Lors de l'impact de la tête sur le capot, celui-ci s'enfonce jusqu'à un impact éventuel avec des éléments rigides situés sous le capot tels que la batterie, des éléments porteurs... L'impact de la tête peut aussi se produire directement dans une zone rigide du capot. Ces impacts contre des éléments rigides constituent la cause principale des décès ou des blessures graves dans ce type d'accident. C'est pourquoi les nouvelles réglementations concernant la sécurité des piétons imposent une course importante entre le capot et la structure interne sous le capot afin d'absorber l'énergie d'un choc.

Lorsque les butées de capot sont implantées dans une zone pouvant être impactée par la tête d'un piéton, il est donc nécessaire de prévoir un système d'escamotage de celles-ci afin de conserver la course du capot. Une telle butée est décrite dans le document FR 2852570 A qui correspond au préambule de la revendication 1.

Le but de l'invention est de proposer une butée, permettant d'adapter facilement la capacité d'amortissement.

A cet effet, la présente invention a pour objet une butée d'appui selon la revendication 1.

Selon d'autres caractéristiques avantageuses de l'invention :
- Les ergots sont venus de moulage, à la fois avec les parois du canon, du tube de guidage et la face supérieure du socle.
- Le tube de guidage est maintenu et centré dans le socle par des nervures venues de moulage avec la paroi interne dudit socle.
- Le socle comporte une patte percée d'une lumière coopérant avec une vis pour permettre la fixation de la butée sur une traverse de la structure avant d'un véhicule automobile.
- La fixation de la butée sur la traverse est, en outre, assurée par une languette qui s'engage, par encliquetage, dans ladite traverse.

D'autres caractéristiques et avantages de l'invention apparaîtront clairement à la lecture de la description ci-après, donnée à titre indicatif en référence aux dessins annexés dans lesquels :
- La figure 1 est une vue d'une butée selon l'invention
- La figure 2 est une section selon AA de la figure 1
- La figure 3 est une vue de dessus de la butée
- La figure 4 est une vue de dessous de ladite butée
- La figure 5 est une vue de la butée montée sur la structure d'un véhicule automobile
- La figure 6 est un arraché de la même butée en vue arrière de la figure 5

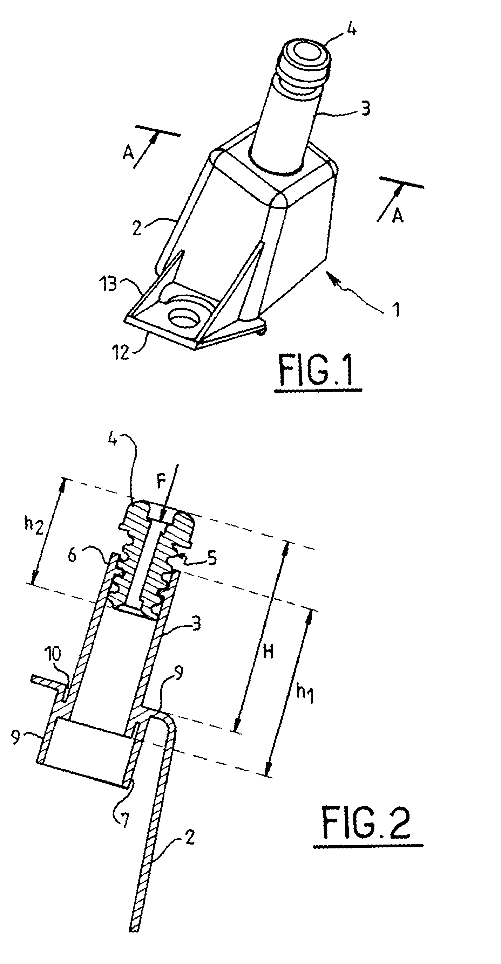

Sur la figure 1 on voit une butée 1 selon l'invention comprenant un socle 2 supportant un canon 3 dont l'extrémité porte un tampon 4 amortissant. Le tampon 4 est réalisé en matériau absorbant les chocs, par exemple en élastomère et, comme on le voit sur la figure 2, il est muni d'un filet 5 coopérant avec un taraudage 6 pratiqué à l'intérieur du canon 3 pour permettre le réglage de la position du tampon par vissage.

La hauteur du socle 2 est au moins égale à la somme des hauteurs h₁ du canon 3 et h₂ du tampon 4.

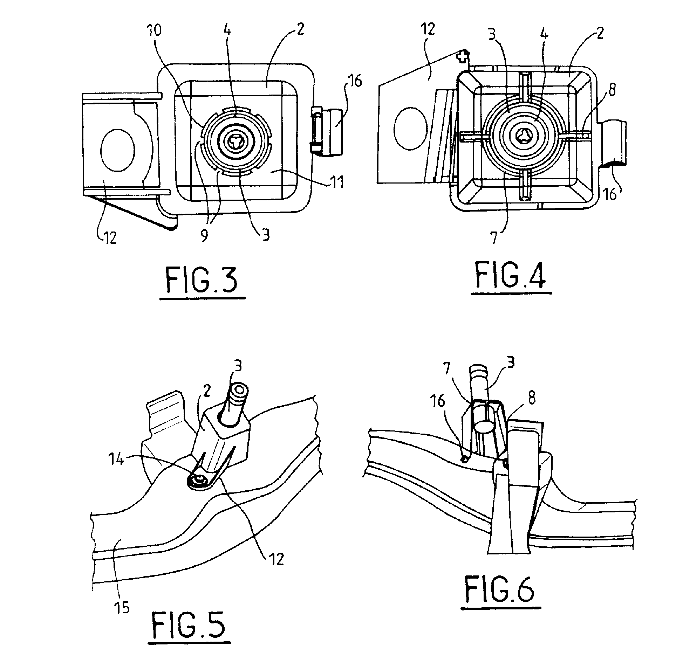

L'extrémité du canon 3, opposée à celle portant le tampon, est engagée dans un tube de guidage 7, lui-même maintenu et centré dans le socle 2 par des nervures 8 (figures 4 et 6) venues de moulage avec la paroi interne dudit socle.

Le canon 3 est engagé dans le socle 2 à travers une ouverture circulaire 10 de diamètre supérieur au diamètre du canon (figures 2 et 4) dans laquelle il est maintenu au moyen d'ergots 9. Ces ergots, par exemple au nombre de six, sont venus de moulage, à la fois avec les paroi s du canon 3, du tube de guidage 7 et la face supérieure 11 du socle 2.

Le socle 2 comporte encore une patte 12 percée d'une lumière 13 coopérant avec une vis 14 pour permettre la fixation de la butée sur une traverse 15 de la structure avant d'un véhicule automobile, comme on le voit sur la figure 5. La fixation de la butée sur la traverse est, en outre, assurée par une languette 16 qui s'engage, par encliquetage, dans ladite traverse (figure 6). Bien entendu, on prévoit au moins deux butées pour assurer la mise en place du capot.

Lorsque les butées sont en place sur la traverse, comme expliqué ci-dessus, le capot est en appui sur les tampons des butées. Les ergots 9 qui retiennent le canon dans son socle sont calculés pour résister à une force au moins égale aux efforts de claquage du capot.

Lorsque la butée est soumise, dans le sens axial du canon, à une force F supérieure à une valeur prédéterminée et représentative d'un impact piéton, les ergots 9 se rompent, libérant le canon 3. Celui-ci s'efface dans le socle 2 dans lequel il est guidé librement , par le tube 7 de manière à conserver la même direction axiale.

On voit que, grâce à la rupture des ergots 9, le capot qui est resté en appui sur les tampons 4 peut s'enfoncer d'une course H égale à la hauteur de la partie du canon 3 extérieure au socle 2 augmentée de la hauteur du tampon dépassant dudit canon.

## Revendications

1. Butée d'appui (1) montée entre le capot articulé d'un véhicule automobile et un élément de la structure dudit véhicule comprenant un socle (2) supportant un canon (3) dont l'extrémité porte un tampon (4) amortissant,
**caractérisée en ce que** l'autre extrémité du canon (3), opposée à celle portant le tampon, est engagée dans un tube de guidage (7) centré dans le socle (2) à travers une ouverture circulaire (10) formée dans le socle, de diamètre supérieur au diamètre du canon, et dans laquelle ledit canon est maintenu au moyen d'ergots (9) aptes à se rompre lorsque la butée est soumise, dans le sens axial du canon, à une force F supérieure à une valeur prédéterminée de façon à permettre l'effacement dudit canon dans le socle (2), dans lequel il est guidé, sans frottements, par le tube (7) de manière à conserver la même direction axiale.

2. Butée selon la revendication 1,
**caractérisée en ce que** les ergots (9) sont venus de moulage, à la fois avec les parois du canon (3), du tube de guidage (7) et la face supérieure (11) du socle (2).

3. Butée selon la revendication 1 ou 2,
**caractérisée en ce que** le tube de guidage (7) est maintenu et centré dans le socle (2) par des nervures (8) venues de moulage avec la paroi interne dudit socle.

4. Butée selon l'une des revendications 1 à 3,
**caractérisée en ce que** le socle (2) comporte une patte (12) percée d'une lumière (13) coopérant avec une vis (14) pour permettre la fixation de la butée sur une traverse (15) de la structure avant d'un véhicule automobile.

5. Butée selon l'une des revendications 1 à 4,
**caractérisée en ce que** la fixation de la butée sur la traverse (15) est, en outre, assurée par une languette (16) qui s'engage, par encliquetage, dans ladite traverse.

## Claims

1. Pressure stop (1) mounted between the articulated bonnet of a motor vehicle and an element of the structure of the said vehicle comprising a base (2) supporting a barrel (3) whose end supports a damping buffer (4),
**characterized in that** the other end of the barrel (3), opposite to that supporting the buffer, is engaged in a guide tube (7) centred in the base (2) through a circular opening (10) formed in the base, of a diameter greater than the diameter of the barrel, and in which the said barrel is held by means of lugs (9) capable of breaking when the stop is subjected, in the axial direction of the barrel, to a force F greater than a predetermined value so as to allow the said barrel to retract into the base (2), in which it is guided, without friction, by the tube (7) so as to retain the same axial direction.

2. Stop according to Claim 1,
**characterized in that** the lugs (9) are made by moulding with the walls of the barrel (3), of the guide tube (7) and the upper face (11) of the base (2) at the same time.

3. Stop according to Claim 1 or 2,
**characterized in that** the guide tube (7) is held and centred in the base (2) by ribs (8) made by moulding with the inner wall of the said base.

4. Stop according to one of Claims 1 to 3,
**characterized in that** the base (2) comprises a foot (12) pierced with a hole (13) interacting with a screw (14) to allow the attachment of the stop to a cross member (15) of the front structure of a motor vehicle.

5. Stop according to one of Claims 1 to 4,
**characterized in that** the stop is also attached to the cross member (15) by a tongue (16) that engages, by snap-fitting, into the said cross member.

## Patentansprüche

1. Anschlag (1), der zwischen der angelenkten Motorhaube eines Kraftfahrzeugs und einem Strukturelement des Fahrzeugs angebracht ist und einen Sockel (2) umfasst, welcher einen Zylinder (3) unterstützt, dessen Ende ein Dämpfkissen (4) trägt,
**dadurch gekennzeichnet, dass** das andere Ende des Zylinders (3), welches dem das Kissen tragenden Ende gegenüberliegt, von einem Führungsschlauch (7) in Eingriff genommen wird, der in dem Sockel (2) über eine kreisförmige Öffnung (10) zentriert ist, die in dem Sockel ausgebildet ist und einen größeren Durchmesser aufweist als der Durchmesser des Zylinders, und in der der Zylinder mittels Zapfen (9) gehalten wird, die dafür ausgelegt sind, bei Beanspruchung des Anschlags mit einer über einem vorgegebenen Wert liegenden Kraft F in einer zum Zylinder axialen Richtung zu brechen, wodurch ermöglicht wird, den Zylinder durch den Schlauch (7) in den Sockel (2), in dem er geführt wird, ohne Reibungskräfte zurückzuziehen, so dass dieselbe Axialrichtung beibehalten wird.

2. Anschlag nach Anspruch 1,
**dadurch gekennzeichnet, dass** die Zapfen (9) mittels Formguss gleichzeitig mit den Wänden des Zylinders (3), des Führungsschlauchs (7) und der Oberfläche (11) des Sockels (2) gebildet sind.

3. Anschlag nach Anspruch 1 oder 2,
**dadurch gekennzeichnet, dass** der Führungsschlauch (7) durch mit der Innenwand des Sockels formgegossene Rippen (8) in dem Sockel (2) zentriert und gehalten wird.

4. Anschlag nach einem der Ansprüche 1 bis 3,
**dadurch gekennzeichnet, dass** der Sockel (2) eine Lasche (12) umfasst, durch die ein Loch (13) gebildet ist, welches mit einer Schraube (14) zusammenwirkt, um die Befestigung des Anschlags an einer Querstrebe (15) der Vorderstruktur eines Kraftfahrzeugs zu ermöglichen.

5. Anschlag nach einem der Ansprüche 1 bis 4,
**dadurch gekennzeichnet, dass** die Befestigung des Anschlags an der Querstrebe (15) außerdem durch ein Anschlussstück (16) sichergestellt wird, welches die Querstrebe durch Einrasten in Eingriff nimmt.
